# EUROPEAN PATENT SPECIFICATION

(11) **EP 3 599 827 B1**
(45) Date of publication and mention of the grant of the patent: **04.05.2022**
(21) Application number: 17716014.0
(22) Date of filing: 22.03.2017
(51) Int. Cl.: A01G 27/06, A01G 27/02, F24F 8/175, A01G 27/00, B01D 53/85

(54) **AIR PURIFIER**
LUFTREINIGER
PURIFICATEUR D'AIR

(43) Date of publication of application: 05.02.2020
(73) Proprietor: Laboratori Fabrici Srl, 33170 Pordenone (PN) (IT)
(72) Inventor: GANIS, Pietro Paolo Felice, 33030 Camino al Tagliamento (UD) (IT); D'ANDREA, Alessio, 33095 San Giorgio della Richinvelda (PN) (IT); VITIELLO, Vincenzo, 25088 Toscolano-Maderno (BS) (IT)
(74) Representative: Münchow, Vera Ute Barbara
(86) International application number: PCT/IB2017/051660
(87) International publication number: WO 2018/211307

(56) References cited:
- CN-A- 103 157 373
- CN-A- 104 642 087
- US-A1- 2002 088 177
- US-A1- 2011 154 985
- US-A1- 2015 282 436
- US-B1- 6 230 437

## Description

### TECHNICAL FIELD

The present invention relates to natural air purifiers where the filtration is done by plants and where thanks to a control unit an air flow is forced in the roots of the plant. Moreover it includes sensors so that helps not only the performance but provides important data regarding the pollutants and conditions of the environment.

### BACKGROUND ART

In general, air purifiers are devices that filter air contaminants, toxic agents, materials, dust, VOCs (volatile organic compounds) through various filters in order to provide clean air. A natural air purifier powered by plants is, among other air purifiers, a device that uses the roots of the plants as filters.

In the roots live microorganism that actively bio-filter toxic agents and degrade them. The natural air purifiers actually available have some drawbacks, like the not optimized air flow to the roots and the not optimal management of the system on the basis of environmental conditions and the effectiveness of the air purifier itself.

The Chinese Patent Application CN 104 642 087 A discloses an air purifier for the biological purification of air which controls air purity by sensors, while the system described in US 2015/282436 A1 is directed to the enhancement of the production of negative air ions by plants. US 6 230 437 B1, US 2011/154985 A1 and CN 103 157 373 A illustrate for example other alternatives of air purifier.

### DISCLOSURE OF THE INVENTION

Object of the invention is to propose an improved natural air purifier which is able to purify air in an optimized manner, in particular with an optimized air flow to the roots and through the matrix in which the roots are enrooted taking into consideration environmental conditions.

The invention is achieved according to the appended claims.

This objects and others which become evident from the following description of the invention and its advantages is obtained by an air purifier comprising:
(a) a first flower pot and a second flower pot which is housed inside the first flower pot wherein
   (a1) the second flower pot is provided with one or more holes; and
   (a2) the first flower pot is provided with an opening;
(b) a control unit housed in said opening and comprising:
   (b1) a fan and preferably a grid covering said fan with respect to the outside of said first flower pot;
   (b2) a temperature sensor;
   (b3) a humidity sensor;
   (b4) at least one air quality sensor; and
   (b5) a microcontroller suitable to receive data from the sensors and to send signals to the fan; and
(c) a self-watering unit,
   wherein the microcontroller contains an algorithm which, in case of low air quality signals from the air quality sensor, controls the self-watering unit of the air purifier
   such that the humidity in the matrix present in the second flower pot is raised.

The person skilled in the art easily individuates suitable sensors commercially available which are useful in the air purifier according to the invention. Air quality sensors may be selected among a CO sensor, a CO₂ sensor, a VOC (volatile organic compounds) sensor, a NOₓ sensor, a SOₓ sensor, a particulate matter (PM) sensor for different particle sizes, for example PM 2.5 (particulate matter with a diameter lower than 2.5 µm), a pollen sensor, etc.

The insertion of the perforated second flower pot in the first flower pot creates a space between the walls of the pots and permits a defined air flow in between which is channeled through the holes in the second flower pot and through the control unit with the fan.

The particular combination of sensors permits to control parameters which are important for air quality, the user of the air purifier gets important data which can be corrected/influenced by the system as will be explained in the following.

Preferably, the control unit further comprises a Wi-Fi module. A Wi-Fi module permits a remote control and monitoring of the system and a communication with external devices, like thermostats of heating units, air-conditioning units, air humidifiers, other filters etc. to react on ambient parameters on the bases of the data collected by the sensors. Data handling and storage from a smartphone, a tablet or a PC is easily possible. On the contrary, a Bluetooth connection, for example, would only permit direct connections.

The self-watering unit helps to increase the humidity level in the matrix where the roots are engrained and avoids that the plant dies because of water shortage. Experimental results show that an elevated humidity, in particular when the matrix is soil, results in an increased air passage and in an increased absorption of toxic substances and thus an increased air purification.

Advantageously, the self-watering unit comprises
(i) a water tank situated under the second flower pot,
(ii) a tube, one end of which is immerged into the water tank and the other end of which is situated in the second flower pot, in particular in soil contained in the second flower pot, or a string at least one end of which is immerged into the water tank and another part of which is situated in the second flower pot, in particular in soil contained in the second flower pot, and optionally
(iii) a valve system, activatable by the microcontroller, which closes or opens the water flow from the tank to the flower pot.

The water flow from the tank to the second flower pot advantageously takes place by capillary action, thus the soil or matrix sucks water only in case of necessity, but in another embodiment, the suction of water can be sustained by a pump.

To exploit the increased purifying capacities of wet matrix or soil, and thus to guarantee an increased humidity level inside the matrix or soil, the microcontroller contains an algorithm which in case of low air quality signals from the air quality sensor controls the self-watering unit of the air purifier such that the humidity in the soil present in the second flower pot is raised.

Another possibility to improve the air quality is to increase the air flow through roots and matrix/soil. Exploiting this effect, in case of low air quality signals received from the air quality sensor, the microcontroller, in a preferred embodiment of the invention, switches the fan on or raises the fan velocity. On the contrary, to save energy and to preserve the fan, in case of good air quality signals received from the air quality sensor, the microcontroller preferably reduces the fan velocity or switches the fan off.

In another advantageous embodiment of the air purifier according to the invention, the microcontroller contains algorithms which calculate from the data collected by the sensors the necessary measures to improve air quality, in particular calculate the temperature, humidity or fan velocity which contribute to improve air quality, and in that the microcontroller pilots, preferably via a Wi-Fi module, at least one of a room heating unit, a room air-conditioning unit, a room humidifier unit, a self-watering unit of the air purifier if present and/or the fan velocity of the fan (32) such that the calculated temperature, humidity, fan velocity and/or air quality are obtained, and optionally the microcontroller contains algorithms to permit a mapping of the collected data in function of time and location. The air purifier provides environmental and soil data and permits the correction of them acting on external devices, like an air-conditioning unit, or internal devices, like the self-watering unit or the fan. Temperature, humidity and fan velocity (amount of air processed by the system) are interrelated factors which are influenced one by the other.

The collected data, preferably, are saved on dedicated servers and may be processed to create a map of the internal spaces based on air quality and to calculate the different levels of air quality in different room zones and to interpolate the data to further improve air quality. This mapping can be of a more global type and cover the temporally and local development of air quality where the air purifier according to the invention is used.

Preferably, the microcontroller indicates, in case of humidity values received from the humidity sensor which drop below a certain threshold value, water shortage in the water tank. The user is notified of water shortage and can fill the tank with water. The use of the humidity sensor to get this information avoids an additional water level indicator, which obviously can be another option for the air purifier according to the invention.

In another advantageous embodiment of the invention, the air purifier further contains a first gasket which hermetically closes the space between the upper edges of the two flower pots and optionally a second gasket interposed between the opening in said first flowerpot and the control unit inserted therein, thus realizing a closed space to enforce the air flow only in the desired spaces and directions avoiding losses of air flow.

Preferably, the air purifier further comprises a tube which extends from the water tank to the outside of said air purifier for adding water to the water tank and optionally a lid to close said tube. This avoids the extraction of the inner flower pot to fill the tank.

Another embodiment of the invention provides an air purifier that further comprises a Reed sensor and a magnet for switching on and off one or more of the components listed under points (b), (b1) to (b5) of claim 1 and/or a Wi-Fi module if present. A Reed contact is a simple device to act on single parts of the system and to handle them independently one from the other. For comfort reasons, the Reed contact is, for example, situated in said lid or in the control unit.

Preferably, said Reed contact is suitable to selectively activate single components of the control unit by pressing a switch being part of the Reed system for different durations of time. The components may be those listed under (b1) to (b5) of claim 1, a Wi-Fi module, a pomp for the water tank, a valve of a self-watering unit, if present and similar. The user is enabled to manually control the system. The Reed contact advantageously activates the system or turns it off; it can make the system work with or without Wi-Fi and can give visual information, for example regarding the air amount processed or in case of declined air quality. The visual information can, for example, be a blinking of the Reed system. In a preferred embodiment of the invention, the control unit of the air purifier is detachable from the first flower pot. This can be realized by attaching the control unit, for example, by screws to the first flower pot or by realizing threads on the control unit and on the opening and to screw the control unit with the opening. Another alternative may be, for example, snap fits.

Advantageously, fan and sensors are incorporated in the control unit in a single block permitting to extract all together to substitute or repair comfortably single elements, like the sensors or the fan motor. This avoids, in case of damage or defect, to substitute the whole air purifier. The fan is preferably a motorized fan.

As a matrix for the plant, soil is particularly preferred as it has better results in absorbing toxic compounds, especially compared to hydroponics or hydroculture. This probably is due to high filtering capacities of soil.

For ecologic reasons, the material for the flower pot preferably is ceramic, stone, or similar and not synthetic or plastic materials. Synthetic or plastic materials are known to release toxic agents, like plasticizers or other additives. That is not the case for natural materials. Advantageously, the second flower pot contains soil and at least one plant. Plants which are particularly suitable to attract toxic substances and particulate matter are *Racomitrium* mosses.

According to an aspect of this invention, the air purifier flowerpot includes, a design shape flowerpot with a circular hole on its front and a inner flowerpot with holes that has to be insert in the main flower pot. The control unit has several sensors that detect the air quality and it is covered by metallic grid; this unit has to be inserted in the circular hole of the flowerpot.

The control unit may include: a fan, microcontroller, a Wi-Fi module, an indoor quality sensor, temperature and humidity sensors, carbon monoxide and dioxide sensors and a PM 2.5 sensor.

In operation, the fan aspires the air from the outside making it go through the roots of the plant and throwing it out of the control unit. Thus, the aspired air from the top side of the flower pot goes through the roots and it is processed by the microorganisms that live and get generated in the roots of the plant. This filtered air then passes through the holes of the inner flowerpot and exits the system by the control unit.

In operation, the fan may also aspire air from the control unit, make it go through the roots of the plant and release the air from the top side of the system. Thus, the aspired air from the control unit passes through the holes of the inner flower pot and gets into the roots of the plant where it is processed by the microorganisms that live and get generate in the roots of the plant. This filtered air then exits from the top of the plant.

In operation, whether the air is aspired from the top of the flower pots or from the control unit, the filtration is also operated by the soil itself.

In operation, once the control unit is connected to electricity, the systems starts working and preferably all the sensors are activated. In operation, as the sensors are activated, the system recognizes three main values: indoor air quality, temperature and humidity.

In operation, thanks to the data received from the three sensors and proprietary algorithms, the system, advantageously, is aware of how much air has to go through the system and has to be processed by the plant. This is fundamental to give the right levels of pollutants that the plant and the whole system have the ability to process.

In operation, the control unit connects, for example, to a normal smartphone via Wi-Fi. Thanks to a smartphone it is possible to manage all the functionalities of the system.

In operation, once the system is connected, it is possible to manage it with the proprietary mobile software application (mobile app), in which all the values of the system are displayed. These values may include: indoor air quality, humidity and temperature. Moreover, the switching on and off of the fan can be managed.

The method may also include further sensors to determine pollution levels, plant diagnostics that will help in the determination of the levels of air that have to go through the system and that enhance the purifying properties of the plants.

Embodiments of the present invention not only use the natural properties of the plants and the soil to filter toxic agents from the air, but with the control unit and its sensors, the system can actively understand the pollution and humidity/temperature levels in order to calibrate precisely the amount of air and pollutants that have to be processed by the plant and the system.

Embodiments of the present invention and further objects and advantages are described below with reference to the drawings. Embodiments of the invention are the object of the dependent claims. The description of preferred embodiments of the air purifier according to the invention is given by way of non-limiting example only.

### BRIEF DESCRIPTION OF THE DRAWINGS

FIG. 1 is an exploded view of a first embodiment of the air purifier according to the present invention;
FIG. 2 illustrates in a sectional view the air purifier according to FIG. 1 in the mounted state with a plant and soil included;
FIG. 3 is a more detailed view of other embodiments of the inner flowerpot of the air purifier according to figures 1 and 2;
FIG. 4 illustrates the control unit of the air purifier of figures 1 and 2 and its components;
FIG. 5 is an exploded view of a second embodiment of the air purifier according to the present invention;
FIG. 6 is an exploded view of the control unit of the air purifier illustrated in FIG. 5; and
FIG. 7 illustrates the embodiment of FIG. 5 in a sectional view with a plant inside.

### DESCRIPTION OF PREFERRED EMBODIMENTS

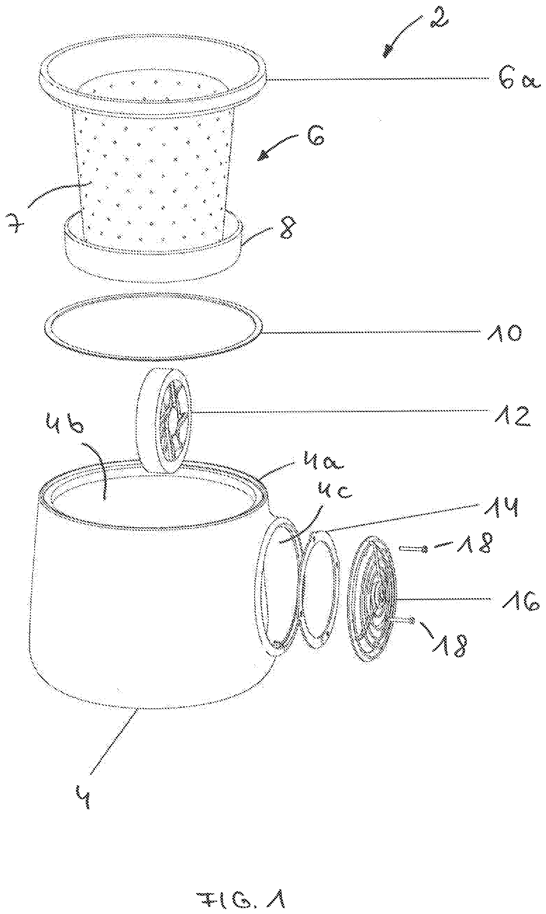

FIG. 1 is an exploded view that illustrates an embodiment of the air purifier 2 according to the present invention. The air purifier 2 contains: an outer flowerpot 4, an inner perforated flowerpot 6 with a plurality of holes 7 a collecting pan 8 to contain excess water, a gasket 10, a tech or control unit 12, a metal plate 14 and a metal grid 16 and a pair of screws 18.

The inner flowerpot **6** has to be inserted in the outer flowerpot **4,** these two pieces are sealed by the gasket **10,** positioned at the intersection of the two pieces, or more in detail positioned on an annular protrusion **4a** realized along the whole perimeter of the upper edge of the opening **4b** receiving the inner flower pot **6,** which abuts with its upper projecting edge **6a** on the gasket **10.**

The control unit **12** is inserted in a side hole **4c** of the outer flowerpot **4** and it is blocked by two screws **18** inside by the metallic plate **14** on the inner side and by the metallic grid **16** on the outside. The metallic grid **16** has both an aesthetical and a protection purpose.

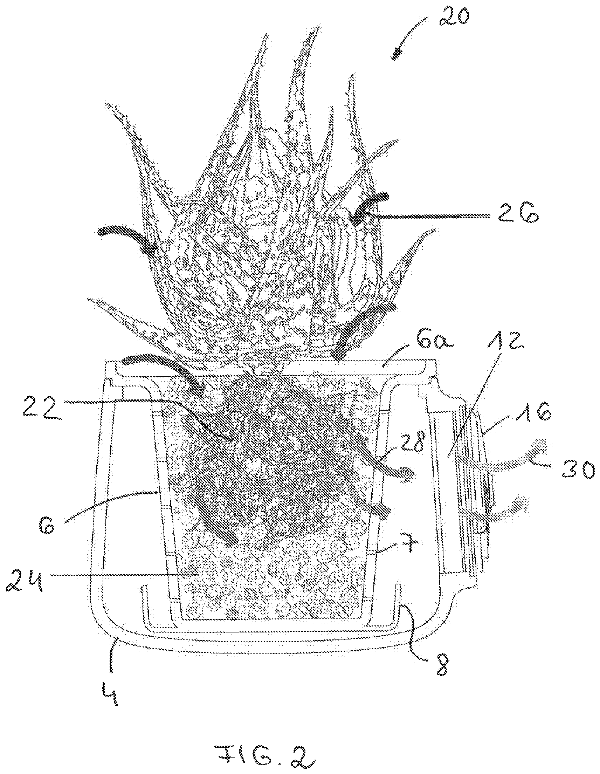

With reference to FIG. 2, the above embodiment of the present invention is shown in a sectional view as including in part, a plant **20,** its roots **22,** soil **24** and the control unit **12.** Arrows **26, 28, 30** show the flow of the air going through the system. The control unit **12** aspires the air from the superior part of the plant **20,** the flow is represented by arrows **26.** The aspired air flow, from the superior part goes through the roots **22** and the soil **24** of the system, the flow is represented by arrows **28.**

After the air has gone through the roots **22** and the soil **24** it is now filtered. The combination between the soil and the microorganisms that live in the roots of the plant actively filter the toxic agents in the air. Filtered air is now pulled out from the inner flowerpot **6** thanks to its holes 7. The flow concludes its path by going through the control unit **12** (arrows **30),** the outgoing air has been filtered by the system. An inverted flow direction is possible, too.

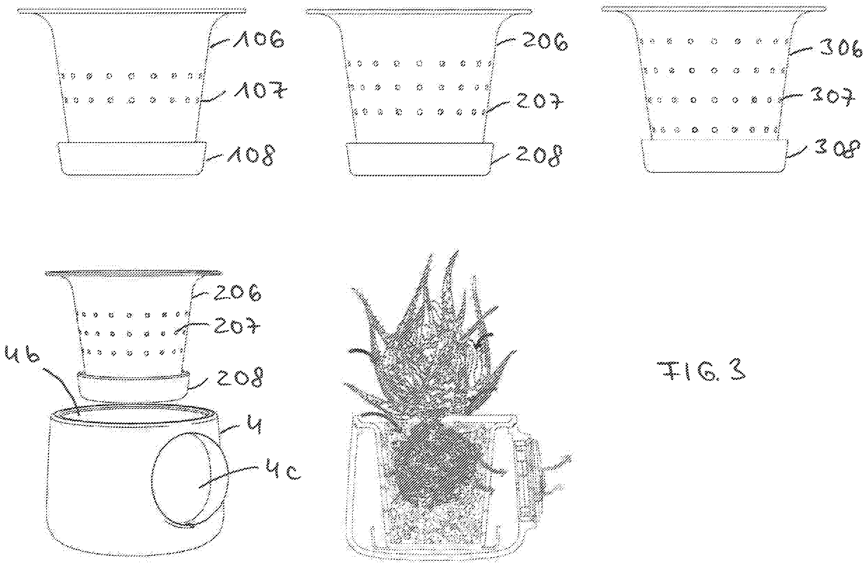

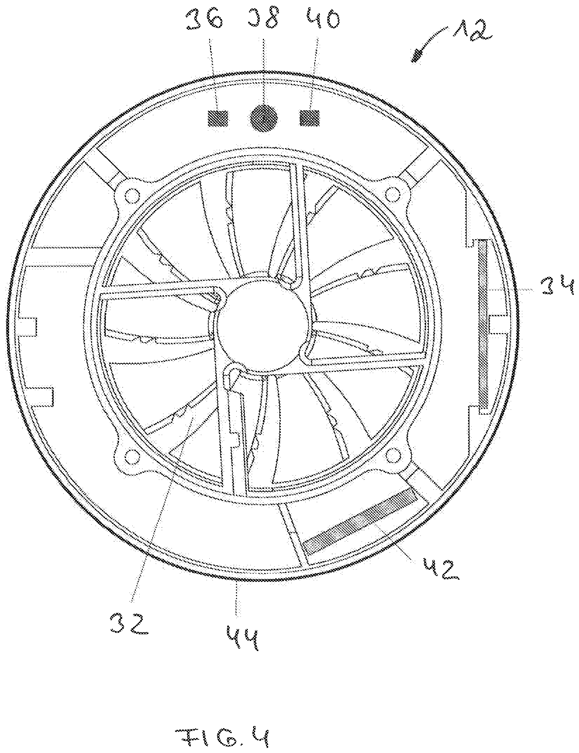

FIG. 3 shows several side views of possible configurations of the inner flower pot **106, 206** and **208.** Version **106** shows two rows of holes **107,** version **206** shows three rows of holes **207** and version **306** four rows of holes **308.** The holes in all configurations extend through the whole lateral surface of the flower pot. These holes are functional to make the air go through all the system and not be blocked in the inner flowerpot and with the number of holes changes the performance of the system. The exemplary insertion of configuration **206** into the outer flower pot **4** is shown as a repetition of fig. 2 to show a completed air purifying system. FIG. 4 illustrates the control unit **12** and its components. The most important part of the control unit is the fan **32,** the fan is responsible of creating the air flow through the system. Another very important part for this invention is the micro-controller **34,** it is responsible for the communication and functioning for the sensing and communicating features of this invention. The sensing unit of this invention is composed by: an indoor air quality (AIQ) sensor **36,** a temperature sensor **38** and a humidity sensor 40. The AIQ sensor may be a VOC (Volatile Organic Compounds) sensor.

This control or tech unit, once connected to electricity starts working autonomously. The AIQ sensor **36** combined with the temperature sensor **38** and the humidity sensor **40** communicate with the microcontroller **34** in which algorithms are coded. Different values from these sensors give different combinations of functionalities of the system. The main and most important output is the speed and the activation of the fan **32.** This is fundamental because it directly influences the intensity of the flow of air that goes through the system.

The communication is possible thanks to a Wi-Fi module **42,** this module is able to connect to many smart devices, including smart phones, computers, and many other.

The main device that will be able to read the data communicated by the tech unit **12** will be a normal smartphone, able to read Wi-Fi signals. Data will be displayed on a regular app. Users will be able to view the data and manage the basic functionalities of the system: functioning of the fan **32,** connections and more. A ring-shaped gasket **44** helps to seal the control unit **12** in the side hole **4c** of the inner flower pot **4.** Together with the gasket **10** a controlled flow of air through control unit **12** and soil **24** and roots **22** without losses is guaranteed.

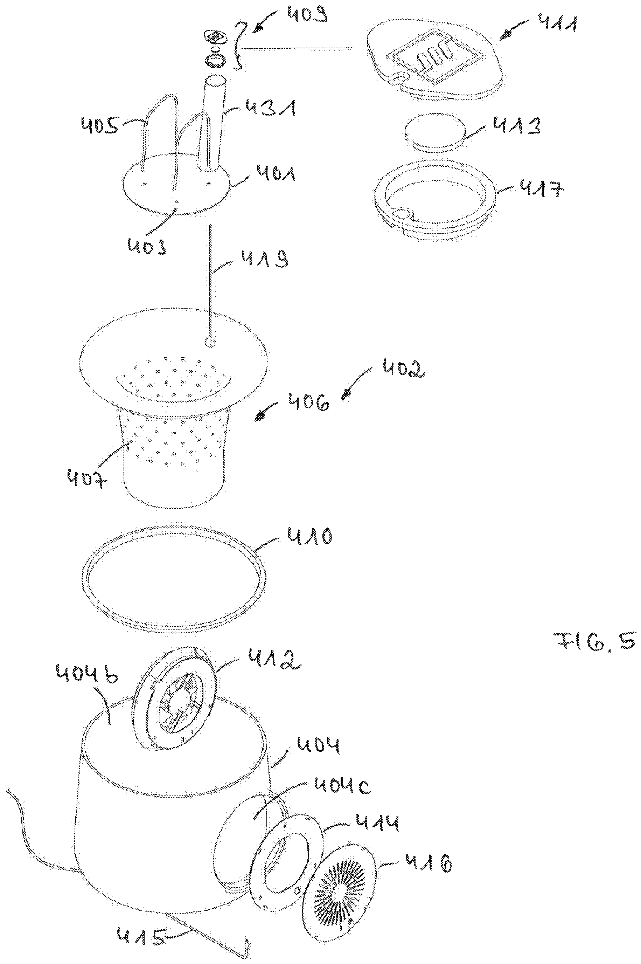

FIG. 5 shows another embodiment of the air purifier according to the invention in an exploded view. The air purifier **402** has an outer flower pot **404** and an inner flower pot **406** with holes **407,** a gasket **410** which provides a sealed insertion of the inner flower pot **406** into the upper opening **404b** of outer flower pot **404.** A control unit **412** (essentially corresponding to the control unit described with reference to fig. 4) is inserted in the side opening **404c** of the outer flower pot **404** and fixed by means of a metal plate **414.** The control unit **412** is protected by a metal grid **416.** An electric power supply is indicated by reference numeral **415.** The main difference - apart from slight constructive changes - with respect to the embodiment represented in fig. 1 is the dividing plate **401** which is placed on a respective support (not represented) inside the inner flower pot **406.** The dividing plate **401** is provided with two pairs of holes **403** which receive the ends of two strings **405.** The dividing plate **401** subdivides the inner flower pot **406** into two chambers (not represented), the lower one serves as a water tank and the upper one serves to contain a matrix suitable for plant growth. The strings **405** will be wetted by water in the tank and water rises them to transport water into the matrix. Alternatively, the strings may be substituted by thin tubes, one end of which dips into water in the lower chamber, the other end of which ends in the matrix. The dividing plate **401** further has a feeding tube **431** that permits to fill the lower chamber with water from the upper side of the air purifier **402.** The feeding tube **431** can be closed by a lid **409** which is composed of an upper lid plate **411,** a magnet **413** (to activate a Reed contact) and a lower plate **417** to contain the magnet **413.** The three parts are assembled together to form the lid **409.** The feeding tube **431** may contain a float indicator **419** which indicates the water level in the tank.

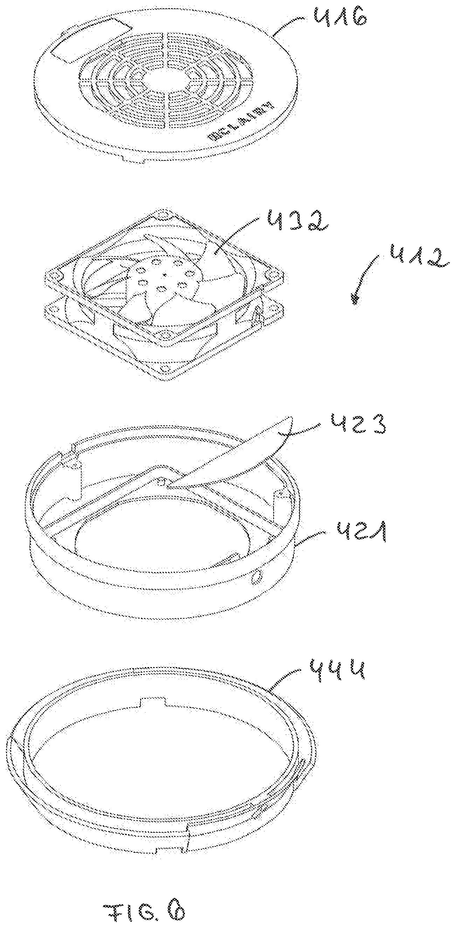

FIG. 6 is an exploded view of the control unit of the air purifier illustrated in FIG. 5: a gasket **444** serves to seal the unit **412** inside the side hole of the inner flower pot (not represented).

The gasket **444** receives a container **421** suitable to house a printed circuit board **423** including several sensors (not represented), for example an air quality sensor, a temperature sensor and a humidity sensor, a Wi-Fi module (not represented), a microcontroller (not represented), a Reed contact (not represented) to interact with the magnet in the lid (as illustrated with reference to fig. 5) and/or a LED (light emitting diode, not represented) which can give information about the status of the air purifier (on/off, for example). The container **421** further houses a fan **432** and is closed for protection purposes (protection of the electronic parts and protection of the user from the fan blades) by a grid **416.**

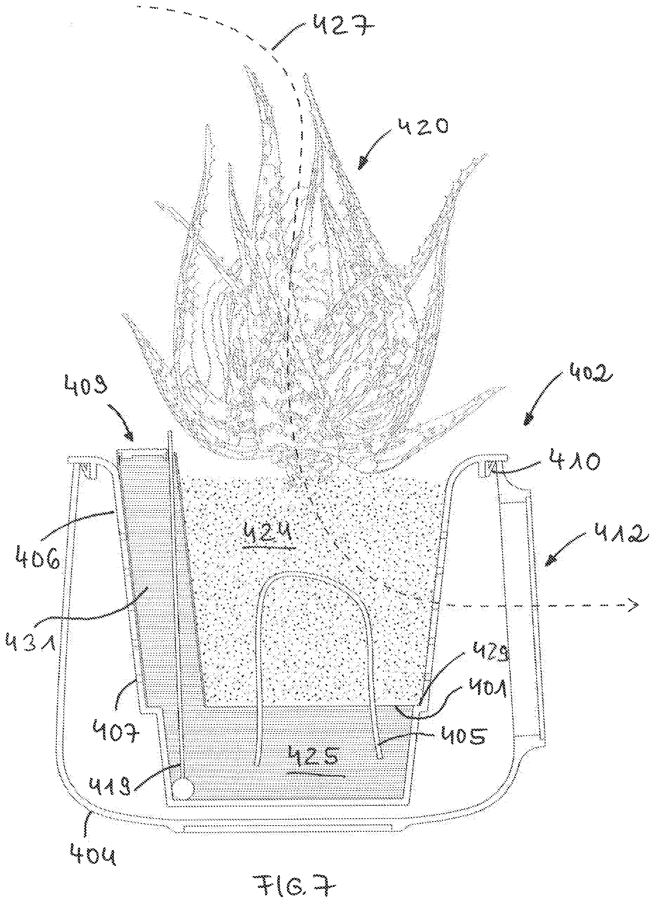

FIG. 7 illustrates the embodiment of FIG. 5 in a sectional view with a plant **420** inside. The inner flower pot **406** is housed inside the outer flower pot **404** sealed by the gasket **410.** The dividing plate **401** subdivides the inner flower pot **406** into an upper chamber filled with soil **424** and a lower chamber **425** (water tank) filled with water (hachured) through the feeding tube **431** which contains the float indicator **419** and is closed by a lid **409.** A string **405** transports water from the water tank **425** to the soil **424.** The dotted arrow **427** shows a possible flow of air entering from the upper side of the air purifier **402,** passing soil **424** and roots (not represented), leaving the inner flower pot **406** through the holes **407,** traversing the space between outer and inner flower pots **404, 406** and finally exiting the system through the control unit **412.** A reverse flow in the opposite direction is also conceivable.

This invention has been presented and described in connection with the embodiments, it will be clear to those who are familiar and skilled in these matters, that modifications and variation that may occur will not affect the purpose of this invention as it has been defined by the appended claims.

## Claims

1. Air purifier (2; 402) comprising:
(a) a first flower pot (4; 404) and a second flower pot (6; 106; 206; 306; 406) which is housed inside the first flower pot (4; 404) wherein
(a1) the second flower pot (6; 106; 206; 306; 406) is provided with one or more holes (7; 107; 207; 307; 407); and
(a2) the first flower pot (4; 404) is provided with an opening (4c; 404c);
(b) a control unit (12; 412) housed in said opening (4c; 404c) and comprising:
(b1) a fan (32; 432) and preferably a grid (16; 416) covering said fan (32; 432) with respect to the outside of said first flower pot (4; 404);
(b2) a temperature sensor (38);
(b3) a humidity sensor (40);
(b4) an air quality sensor (36); and
(b5) a microcontroller (34) suitable to receive data from the sensors (36, 38, 40) and to send signals to the fan (32; 432),
**characterized in that** the air purifier comprises:
(c) a self-watering unit,
wherein the microcontroller (34) contains an algorithm which, in case of low air quality signals from the air quality sensor (36), controls the self-watering unit of the air purifier such that the humidity in the matrix present in the second flower pot (406) is raised.

2. Air purifier (2; 402) according to claim 1 **characterized in that** the control unit (12; 412) further comprises a Wi-Fi module (42).

3. Air purifier (2; 402) according to anyone of the preceding claims **characterized in that,** in case of low air quality signals received from the air quality sensor (36), the microcontroller (34) switches the fan on or raises the fan (32; 432) velocity and that, in case of good air quality signals received from the air quality sensor (36), the microcontroller (34) switches the fan off or reduces the fan (32; 432) velocity.

4. Air purifier (2; 402) according to anyone of the preceding claims **characterized in that** the microcontroller (34) contains algorithms which calculate from the data collected by the sensors (36, 38, 40) the necessary measures to improve air quality, in particular calculate the temperature, humidity or fan velocity which contribute to improve air quality, and **in that** the microcontroller (34) pilots, preferably via a Wi-Fi module (42), a room heating unit, a room air-conditioning unit, a room humidifier unit, a self-watering unit of the air purifier and/or the fan velocity of the fan (32) such that the calculated temperature, humidity, fan velocity and/or air quality are obtained, and **in that** the microcontroller optionally contains algorithms to permit a mapping of the collected data in function of time and location.

5. Air purifier (2; 402) according to anyone of the preceding claims **characterized in that** the microcontroller (34) indicates in case of humidity values, received from the humidity sensor (40), which drop below a certain threshold value, water shortage in the water tank.

6. Air purifier (2; 402) according to anyone of the preceding claims **characterized in that** it further contains a first gasket (10; 410) which hermetically closes the space between the upper edges of the two flower pots (4, 6; 404, 406) and optionally a second gasket (44; 444) interposed between the opening (4c; 404c) in said first flowerpot (4; 404) and the control unit (12; 412) inserted therein.

7. Air purifier (402) according to anyone of the preceding claims **characterized in that** said self-watering unit comprises
(i) a water tank (425) situated under the second flower pot (406),
(ii) a tube, one end of which is immerged into the water tank and the other end of which is situated in the second flower pot, in particular in soil contained in the second flower pot, or a string (405) at least one end of which is immerged into the water tank (425) and another part of which is situated in the second flower pot (406), in particular in soil (424) contained in the second flower pot (406), and optionally
(iii) a valve system, activatable by said microcontroller, which closes or opens the water flow from the tank to the flower pot.

8. Air purifier (402) according to claim 7 **characterized in that** the air purifier further comprises a tube (431) which extends from the water tank (425) to the outside of said air purifier (402) for adding water to the water tank (425) and optionally a lid (409) to close said tube.

9. Air purifier (402) according to anyone of the preceding claims **characterized in that** the air purifier further comprises a Reed contact and a magnet (413) for switching on and off one or more of the components listed under points (b), (b1) to (b5) of claim 1 and/or a Wi-Fi module, if present.

10. Air purifier (402) according to claims 8 and 9 **characterized in that** said Reed contact is situated in said lid (409) or in the control unit (412).

11. Air purifier (402) according to claim 9 or 10 **characterized in that** said Reed contact is suitable to selectively activate single components of the control unit (412) as listed under points (b1) to (b5) of claim 1 and/or a Wi-Fi module, if present, by pressing a switch being part of the Reed system for different durations of time.

12. Air purifier (2; 402) according to anyone of the preceding claims **characterized in that** said second flower pot (6; 406) contains soil (24; 424) and at least one plant (20; 420), for example the moss *Racomitrium lanuginosum.*

13. Air purifier (2; 402) according to anyone of the preceding claims **characterized in that** the control unit (12; 412) is detachable from the first flower pot (4; 404).

## Patentansprüche

1. Luftreiniger (2; 402), umfassend:
(a) einen ersten Blumentopf (4; 404) und einen zweiten Blumentopf (6; 106; 206; 306; 406), der innerhalb des ersten Blumentopfs (4; 404) angeordnet ist, wobei
(a1) der zweite Blumentopf (6; 106; 206; 306; 406) mit einem oder mehreren Löchern (7; 107; 207; 307; 407) versehen ist; und
(a2) der erste Blumentopf (4; 404) mit einer Öffnung (4c; 404c) versehen ist;
(b) eine Steuereinheit (12; 412), die in besagter Öffnung (4c; 404c) angeordnet ist und umfasst:
(b1) ein Gebläse (32; 432) und vorzugsweise ein Gitter (16; 416), das das Gebläse (32; 432) in Bezug auf die Außenseite des ersten Blumentopfs (4; 404) abdeckt;
(b2) einen Temperatursensor (38);
(b3) einen Feuchtigkeitssensor (40);
(b4) einen Luftqualitätssensor (36); und
(b5) einen Mikrocontroller (34), der geeignet ist, Daten von den Sensoren (36, 38, 40) zu empfangen und Signale an das Gebläse (32; 432) zu senden,
**dadurch gekennzeichnet, dass** der Luftreiniger
(c) eine Selbstbewässerungseinheit enthält,
wobei der Mikrocontroller (34) einen Algorithmus enthält, der im Falle von niedrigen Luftqualitätssignalen vom Luftqualitätssensor (36) die Selbstbewässerungseinheit des Luftreinigers so steuert, dass die Feuchtigkeit in der im zweiten Blumentopf (406) vorhandenen Matrix erhöht wird.

2. Luftreiniger (2; 402) nach Anspruch 1, **dadurch gekennzeichnet, dass** die Steuereinheit (12; 412) ferner ein Wi-Fi-Modul (42) umfasst.

3. Luftreiniger (2; 402) nach einem der vorhergehenden Ansprüche, **dadurch gekennzeichnet, dass** der Mikrocontroller (34) im Falle von Signalen niedriger Luftqualität, die von dem Luftqualitätssensor (36) empfangen werden, das Gebläse einschaltet oder die Geschwindigkeit des Gebläses (32; 432) erhöht, und dass im Falle von Signalen guter Luftqualität, die von dem Luftqualitätssensor (36) empfangen werden, der Mikrocontroller (34) das Gebläse ausschaltet oder die Geschwindigkeit des Gebläses (32; 432) verringert.

4. Luftreiniger (2; 402) nach einem der vorhergehenden Ansprüche, **dadurch gekennzeichnet, dass** der Mikrocontroller (34) Algorithmen enthält, die aus den von den Sensoren (36, 38, 40) gesammelten Daten die notwendigen Maßnahmen zur Verbesserung der Luftqualität berechnen, insbesondere die Temperatur, die Luftfeuchtigkeit oder die Gebläsegeschwindigkeit berechnen, die zur Verbesserung der Luftqualität beitragen, und dass der Mikrocontroller (34), vorzugsweise über ein Wi-Fi-Modul (42) eine Raumheizungseinheit, eine Raumklimatisierungseinheit, eine Raumbefeuchtungseinheit, eine Selbstbewässerungseinheit des Luftreinigers und/oder die Gebläsegeschwindigkeit des Gebläses (32) so steuert, dass die berechnete Temperatur, Feuchtigkeit, Gebläsegeschwindigkeit und/oder Luftqualität erhalten wird, und dass der Mikrocontroller optional Algorithmen enthält, um eine Kartierung der erfassten Daten in Abhängigkeit von Zeit und Ort zu ermöglichen.

5. Luftreiniger (2; 402) nach einem der vorhergehenden Ansprüche, **dadurch gekennzeichnet, dass** der Mikrocontroller (34) bei vom Feuchtigkeitssensor (40) empfangenen Feuchtigkeitswerten, die unter einen bestimmten Schwellenwert fallen, Wassermangel im Wassertank anzeigt.

6. Luftreiniger (2; 402) nach einem der vorhergehenden Ansprüche, **dadurch gekennzeichnet, dass** er außerdem eine erste Dichtung (10; 410), die den Raum zwischen den oberen Rändern der beiden Blumentöpfe (4, 6; 404, 406) hermetisch abschließt, und optional eine zweite Dichtung (44; 444) enthält, die zwischen der Öffnung (4c; 404c) in besagtem ersten Blumentopf (4; 404) und der darin eingesetzten Steuereinheit (12; 412) angeordnet ist.

7. Luftreiniger (402) nach einem der vorhergehenden Ansprüche, **dadurch gekennzeichnet, dass** die Selbstbewässerungseinheit umfasst
(i) einen Wassertank (425), der sich unter dem zweiten Blumentopf (406) befindet,
(ii) einen Schlauch, dessen eines Ende in den Wassertank eingetaucht ist und dessen anderes Ende sich in dem zweiten Blumentopf befindet, insbesondere in der in dem zweiten Blumentopf enthaltenen Erde, oder eine Schnur (405), von der mindestens ein Ende in den Wassertank (425) eingetaucht ist und deren anderer Teil sich in dem zweiten Blumentopf (406) befindet, insbesondere in der in dem zweiten Blumentopf (406) enthaltenen Erde (424), und wahlweise
(iii) ein durch den Mikrocontroller aktivierbares Ventilsystem, das den Wasserfluss vom Tank zum Blumentopf schließt oder öffnet.

8. Luftreiniger (402) nach Anspruch 7, **dadurch gekennzeichnet, dass** der Luftreiniger ferner ein Rohr (431), das sich von dem Wassertank (425) zur Außenseite des Luftreinigers (402) erstreckt, um dem Wassertank (425) Wasser hinzuzufügen, und optional einen Deckel (409) zum Verschließen des Rohrs umfasst.

9. Luftreiniger (402) nach einem der vorhergehenden Ansprüche, **dadurch gekennzeichnet, dass** der Luftreiniger ferner einen Reed-Kontakt und einen Magneten (413) zum Ein- und Ausschalten einer oder mehrerer der unter den Punkten (b), (b1) bis (b5) von Anspruch 1 aufgeführten Komponenten und/oder ein Wi-Fi-Modul, falls vorhanden, umfasst.

10. Luftreiniger (402) nach den Ansprüchen 8 und 9, **dadurch gekennzeichnet, dass** der Reed-Kontakt in dem Deckel (409) oder in der Steuereinheit (412) angeordnet ist.

11. Luftreiniger (402) nach Anspruch 9 oder 10, **dadurch gekennzeichnet, dass** der Reed-Kontakt geeignet ist, einzelne Komponenten der Steuereinheit (412), wie sie unter den Punkten (b1) bis (b5) von Anspruch 1 aufgeführt sind, und/oder ein Wi-Fi-Modul, falls vorhanden, selektiv zu aktivieren, indem ein Schalter, der Teil des Reed-Systems ist, für unterschiedliche Zeitdauern gedrückt wird.

12. Luftreiniger (2; 402) nach einem der vorhergehenden Ansprüche, **dadurch gekennzeichnet, dass** der zweite Blumentopf (6; 406) Erde (24; 424) und mindestens eine Pflanze (20; 420), zum Beispiel das Moos *Racomitrium lanuginosum,* enthält.

13. Luftreiniger (2; 402) nach einem der vorhergehenden Ansprüche, **dadurch gekennzeichnet, dass** die Steuereinheit (12; 412) von dem ersten Blumentopf (4; 404) lösbar ist.

## Revendications

1. Purificateur d'air (2 ; 402) comprenant :
(a) un premier pot de fleurs (4; 404) et un second pot de fleurs (6; 106; 206; 306; 406) qui est logé à l'intérieur du premier pot de fleurs (4; 404) dans lequel
(a1) le second pot de fleurs (6; 106; 206; 306; 406) est pourvu d'un ou plusieurs trous (7; 107; 207; 307; 407) ; et
(a2) le premier pot de fleurs (4; 404) est pourvu d'une ouverture (4c; 404c);
(b) une unité de commande (12; 412) logée dans ladite ouverture (4c; 404c) et comprenant:
(b1) un ventilateur (32; 432) et de préférence une grille (16; 416) recouvrant ledit ventilateur (32; 432) par rapport à l'extérieur dudit premier pot de fleurs (4; 404);
(b2) un capteur de température (38) ;
(b3) un capteur d'humidité (40) ;
(b4) un capteur de qualité de l'air (36) ; et
(b5) un microcontrôleur (34) adapté pour recevoir des données des capteurs (36, 38, 40) et pour envoyer des signaux au ventilateur (32; 432),
**caractérisé en ce que** le purificateur d'air comprend
(c) une unité d'auto-arrosage,
dans lequel le microcontrôleur (34) contient un algorithme qui, en cas de signaux de faible qualité de l'air provenant du capteur de qualité de l'air (36), commande l'unité d'auto-arrosage du purificateur d'air de telle sorte que l'humidité dans la matrice présente dans le second pot de fleurs (406) soit augmentée.

2. Purificateur d'air (2 ; 402) selon la revendication 1, **caractérisé en ce que** l'unité de commande (12; 412) comprend en outre un module Wi-Fi (42).

3. Purificateur d'air (2; 402) selon l'une quelconque des revendications précédentes, **caractérisé en ce que,** en cas de signaux de faible qualité de l'air reçus du capteur de qualité de l'air (36), le microcontrôleur (34) met en marche le ventilateur ou augmente la vitesse du ventilateur (32; 432) et **en ce que**, en cas de signaux de bonne qualité de l'air reçus du capteur de qualité de l'air (36), le microcontrôleur (34) arrête le ventilateur ou réduit la vitesse du ventilateur (32; 432).

4. Purificateur d'air (2; 402) selon l'une quelconque des revendications précédentes, **caractérisé en ce que** le microcontrôleur (34) contient des algorithmes qui calculent, à partir des données collectées par les capteurs (36, 38, 40), les mesures nécessaires pour améliorer la qualité de l'air, en particulier calculent la température, l'humidité ou la vitesse du ventilateur qui contribuent à améliorer la qualité de l'air, et **en ce que** le microcontrôleur (34) pilote, de préférence par l'intermédiaire d'un module Wi-Fi (42) une unité de chauffage de la pièce, une unité de climatisation de la pièce, une unité d'humidification de la pièce, une unité d'autoarrosage du purificateur d'air et/ou la vitesse du ventilateur (32) de sorte que la température, l'humidité, la vitesse du ventilateur et/ou la qualité de l'air calculées soient obtenues, et **en ce que** le microcontrôleur contient éventuellement des algorithmes pour permettre une cartographie des données collectées en fonction du temps et du lieu.

5. Purificateur d'air (2; 402) selon l'une quelconque des revendications précédentes **caractérisé en ce que** le microcontrôleur (34) indique en cas de valeurs d'humidité, reçues du capteur d'humidité (40), qui descendent en dessous d'une certaine valeur seuil, un manque d'eau dans le réservoir d'eau.

6. Purificateur d'air (2 ; 402) selon l'une quelconque des revendications précédentes **caractérisé en ce qu'il** contient en outre un premier joint (10; 410) qui ferme hermétiquement l'espace entre les bords supérieurs des deux pots de fleurs (4, 6; 404, 406) et éventuellement un second joint (44; 444) interposé entre l'ouverture (4c; 404c) dans ledit premier pot de fleurs (4; 404) et l'unité de commande (12; 412) insérée dans celui-ci.

7. Purificateur d'air (402) selon l'une quelconque des revendications précédentes **caractérisé en ce que** ladite unité d'auto-arrosage comprend
(i) un réservoir d'eau (425) situé sous le deuxième pot de fleurs (406),
(ii) un tube dont une extrémité est immergée dans le réservoir d'eau et dont l'autre extrémité est située dans le deuxième pot de fleurs, notamment dans la terre contenue dans le deuxième pot de fleurs, ou une ficelle (405) dont au moins une extrémité est immergée dans le réservoir d'eau (425) et dont une autre partie est située dans le deuxième pot de fleurs (406), notamment dans la terre (424) contenue dans le deuxième pot de fleurs (406), et éventuellement
(iii) un système de vanne, activable par ledit microcontrôleur, qui ferme ou ouvre le flux d'eau du réservoir vers le pot de fleurs.

8. Purificateur d'air (402) selon la revendication 7, **caractérisé en ce que** le purificateur d'air comprend en outre un tube (431) qui s'étend du réservoir d'eau (425) à l'extérieur dudit purificateur d'air (402) pour ajouter de l'eau au réservoir d'eau (425) et éventuellement un couvercle (409) pour fermer ledit tube.

9. Purificateur d'air (402) selon l'une quelconque des revendications précédentes, **caractérisé en ce que** le purificateur d'air comprend en outre un contact Reed et un aimant (413) pour mettre en marche et arrêter un ou plusieurs des composants énumérés aux points (b), (b1) à (b5) de la revendication 1 et/ou un module Wi-Fi, s'il est présent.

10. Purificateur d'air (402) selon les revendications 8 et 9 **caractérisé en ce que** ledit contact Reed est situé dans ledit couvercle (409) ou dans l'unité de commande (412).

11. Purificateur d'air (402) selon la revendication 9 ou 10, **caractérisé en ce que** ledit contact Reed est approprié pour activer sélectivement des composants individuels de l'unité de commande (412) tels qu'énumérés aux points (b1) à (b5) de la revendication 1 et/ou un module Wi-Fi, s'il est présent, en appuyant sur un commutateur faisant partie du système Reed pendant différentes durées.

12. Purificateur d'air (2 ; 402) selon l'une quelconque des revendications précédentes **caractérisé en ce que** ledit deuxième pot de fleurs (6 ; 406) contient de la terre (24; 424) et au moins une plante (20; 420), par exemple la mousse *Racomitrium lanuginosum.*

13. Purificateur d'air (2; 402) selon l'une quelconque des revendications précédentes **caractérisé en ce que** l'unité de commande (12 ; 412) est détachable du premier pot de fleurs (4; 404).
